# EUROPÄISCHE PATENTSCHRIFT

(11) **EP 1 593 861 B1**
(45) Veröffentlichungstag und Bekanntmachung des Hinweises auf die Patenterteilung: **18.04.2007**
(21) Anmeldenummer: 05009547.0
(22) Anmeldetag: 30.04.2005
(51) Int. Cl.: F16B 7/04, F16B 9/02

(54) **Verbindungselement**
Connecting element
Elément de liaison

(30) Priorität: 06.05.2004 DE 102004022471
(43) Veröffentlichungstag der Anmeldung: 09.11.2005
(73) Patentinhaber: Bosch Rexroth AG, 70184 Stuttgart (DE)
(72) Erfinder: Ludwig, Peter, 72072 Tübingen (DE); Küpferle, Harald, 74385 Pleidelsheim (DE)

(56) Entgegenhaltungen:
- WO-A-01/04438
- DE-A1- 2 232 788
- DE-U1- 29 508 686
- DE-U1- 29 514 815

## Beschreibung

Die Erfindung geht aus von einer lösbaren Verbindung, umfassend einen Profilstab mit mindestens einer ebenen Längsseite, die mindestens eine hinterschnittene Nut aufweist, ein rohrförmiges Element mit einer Längsachse und mindestens einer dazu parallel verlaufenden Bohrung, und ein Verbindungselement, das zwischen dem Profilstab und dem rohrförmigen Element angeordnet ist und dessen Außenkontur im Wesentlichen der des rohrförmigen Elements entspricht.

Eine solche Verbindung ist aus der DE 295 14 815 41 bekannt.

Derartige Verbindungen kommen häufig zur Anwendung bei Regalsystemen zur Materialbereitstellung, Handläufen oder Griffen.

Aus dem Katalog der Firma Item ist ein Befestigungssatz für Handgriffe bekannt. Zur Befestigung des Handgriffs an einem Profilstab dienen zwei Laschen, die einerseits mittels Schrauben an den beiden Enden des Griffs befestigt werden. Zwei weitere Schrauben durchgreifen die Laschen in entgegengesetzter Richtung, um mit den, in der hinterschnittenen Nut des Profilstabs angeordneten Nutensteinen in Schraubeingriff zu gelangen. Die Laschen ragen über den Außendurchmesser des Handgriffs hinaus.

In der DE-OS 22 32 788 ist ein mehrteiliges Verbindungselement zum Verbinden von zwei, im Winkel zueinander stehenden Profilstreben gezeigt. Bei den Profilstreben handelt es sich um ein Vierkantprofil mit einer hinterschnittenen Nut sowie um eine als Rohr ausgebildete Strebe. Der Schaft eines hammerförmigen Elements wird von einer Hülse aufgenommen, die wiederum in eine Stirnseite der Strebe gesteckt wird. Eine, die Strebenwand durchgreifende und in der Hülse eingedrehte Arretierschraube greift in eine Arretiervertiefung des Verbindungselements ein. Nach erfolgter Positionierung des Hammerkopfs des Verbindungselements in der Nut des Vierkantprofils wird durch weiteres Eindrehen der Arretierschraube die Strebe fixiert. Obwohl das bekannte Verbindungselement nicht nur für Stumpfstoßverbindungen geeignet ist, besitzt es auf Grund der Teilevielfalt Nachteile hinsichtlich Herstellung und Montage.

Die DE 295 14 815 U1 offenbart ein Element zum Verbinden zweier Stangenprofile. Dazu weist das Verbindungselement einen Formabschnitt und ein Anschlussstück auf. Zum Verbinden der beiden Stangenprofile erfolgt über eine Vorrichtung zuerst die Befestigung des Formabschnitts am Profil. Die Befestigung des zweiten Stangenprofils erfolgt lediglich durch Aufstecken des Profilendabschnitts auf das Anschlussstück des Verbindungselements. Obwohl durch die am Verbindungselement vorhandenen Rastelemente ein Verdrehen des Stangenprofils gegenüber dem Profil verhindert wird, führt eine Zugbeanspruchung längs des Stangenprofils zum Lösen der Verbindung. Insbesondere für Handläufe oder Griffe ist die bekannte Verbidung mehr oder weniger ungeeignet, da derartige Anwendungen in der Lage sein müssen, Längs- und Querbeanspruchungen aufzunehmen. Ein weiterer Nachteil dieser Lösung ist in der großen Teilevielfalt zu sehen.

Der aus dem deutschen Gebrauchsmuster Nr. 295 08 686 bekannte Bausatz zum Verbinden zweier, im rechten Winkel zueinander angeordneter Profilrohre weist ein Verbindungselement und einen Bolzen mit Schraube auf. Während der Bolzenkopf in eine hinterschnittene Längsnut der Stütze eingeführt wird, kann über die am Bolzenschaft angreifende sowie sich am Profilrohr abstützende Schraube unter Zwischenschaltung eines Verbindungselements die Verbindung der beiden Profilrohre hergestellt werden. Ein Nachteil an dieser Lösung besteht darin, dass eine gesonderte Gewindebohrung im Profilrohr erforderlich ist, die die Schraube aufnimmt.

Mit der in der WO 01/04438 A1 gezeigten Lösung können Tragprofile in einem beliebigen Winkel zueinander angeordnet werden. Dazu umfasst das Verbindungselement einen Scheibenkörper, dessen Kante im Zusammenwirken mit einem Klemmstück in der Nut des Tragprofils geklemmt werden kann. Ein Nachteil dieser bekannten Verbindungseinrichtung besteht im Wesentlichen darin, dass ein glatter Übergang zwischen den Tragprofilen nicht realisiert werden kann, so dass diese Lösung insbesondere für Handläufe und Griffe nicht geeignet ist.

Demgegenüber besteht die Aufgabe der Erfindung darin, eine lösbare Verbindung für profilstäbe bereitzustellen, die einfach aufgebaut ist und sich leicht montieren lässt, ohne zusätzliche Bearbeitungsvorgänge an den zu verbindenden Profilelementen vornehmen zu müssen.

Erfindungsgemäß wird die Aufgabe dadurch gelöst, dass das Verbindungselement aus einem Gehäuse und einem Deckel besteht, wobei das Gehäuse einen Innenraum zur Aufnahme von Befestigungsmitteln bildet und die Mantelfläche des Gehäuses einen Durchbruch aufweist, der mit dem Deckel verschließbar ist.

Mit dem erfindungsgemäßen Verbindungselement ist ein homogener Übergang von dem rohrförmigen Element bis zur Längsseite des Profilstabs gewährleistet, da die Außenkontur des Verbindungselements im Wesentlichen der des rohrförmigen Elements entspricht.

Weitere vorteilhafte Ausgestaltungen der Erfindung ergeben sich aus den Unteransprüchen.

Die Erfindung soll anhand eines Ausführungsbeispiels näher erläutert werden. Es zeigen
- Fig. 1:: eine perspektivische Ansicht einer erfindungsgemäßen Verbindung,
- Fig. 2:: eine perspektivische Explosionsdarstellung des Verbindungselements und
- Fig. 3:: eine Seitenansicht der erfindungsgemäßen Verbindung im Schnitt.

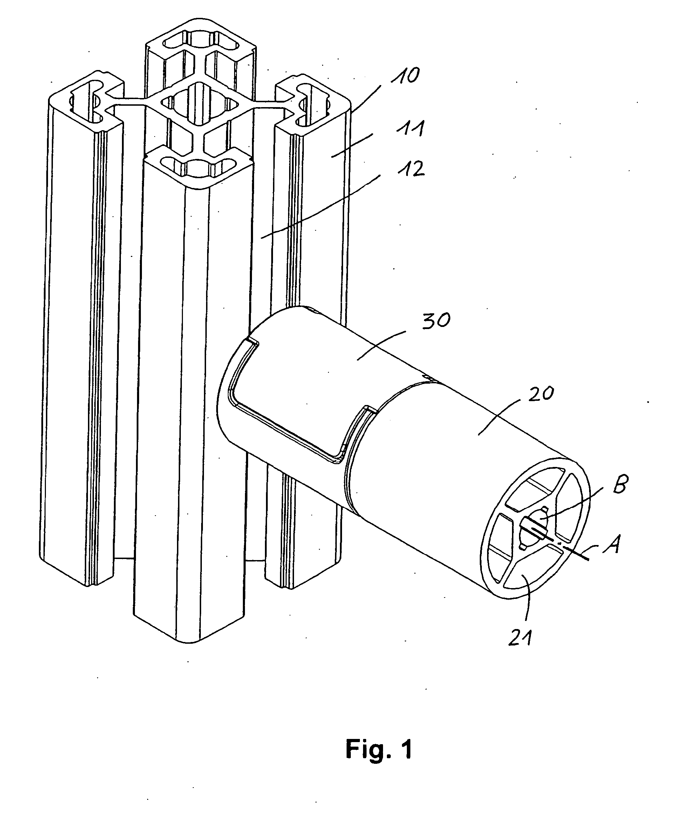

Fig. 1 zeigt eine T-förmige Verbindung zwischen einem Profilstab 10 und einem rohrförmigen Element 20. Zum Beispiel können der Profilstab 10 als Ständer und das rohrförmige Element 20 als Querstrebe ausgebildet sein.

An den Seitenflächen 11 des Profilstabs10 sind hinterschnittene Nuten 12 angeordnet. In dem gezeigten Beispiel besitzt jede Seitenfläche 11 eine mittig verlaufende Nut 12. Demgegenüber weist das rohrförmige Element 20 eine geschlossene Mantelfläche sowie in Längsrichtung verlaufende Hohlkammern 21 auf, wobei eine als Bohrung B ausgebildete Hohlkammer genau auf der Längsachse A verläuft.

Das erfindungsgemäße Element 30 ist zwischen dem Profilstab 10 und dem rohrförmigen Element 20 angeordnet, wobei die Außendurchmesser des rohrförmigen und des Verbindungselements im Wesentlichen gleich groß sind. Dadurch entsteht in diesem Bereich keine Abstufung, was nicht nur optisch von Vorteil ist.

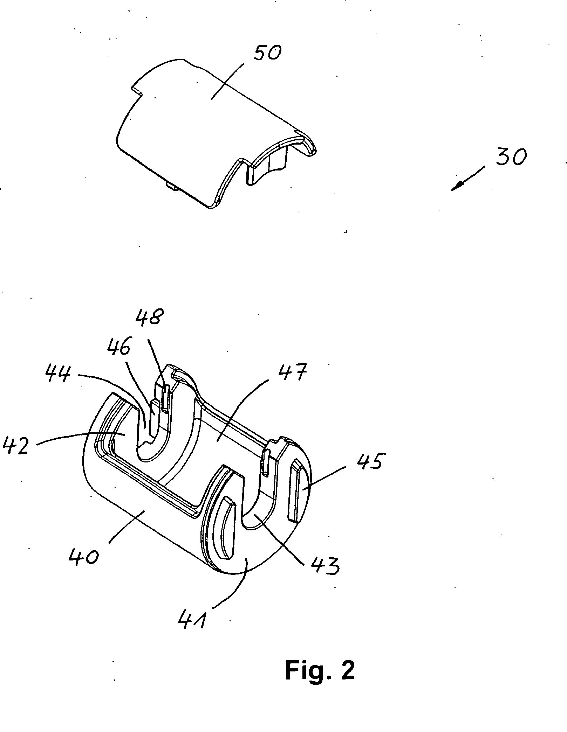

Das in Fig. 2 als Explosionsdarstellung gezeigte erfindungsgemäße Element 30 besteht aus einem Gehäuse 40 und einem Deckel 50. Bei aufgestecktem Deckel 50 hat das Verbindungselement 30 die Form eines Zylinders.

Das Gehäuse 40 des Elements 30, das vorzugsweise aus Aluminium-Druckguss hergestellt ist, weist eine Mantelfläche und zwei, die Mantelfläche begrenzende Zylinderflächen 41, 42 auf.

Die Mantelfläche ist an einer Stelle durchbrochen. Dieser Durchbruch 47 ermöglicht einen ungehinderten Zugang zu den im Inneren des Gehäuses 40 liegenden Befestigungsmitteln und ist mit dem Deckel 50 verschließbar.

Die Zylinderflächen 41 , 42 weisen Bohrungen 43, 44 auf, die in Richtung des Durchbruchs 47 offen sind. In diesen Bohrungen 43, 44 sind Mittel zum Befestigen des Verbindungselements 30 an dem Profilstab 10 bzw. an dem rohrförmigen Element 20 aufgenommen.

Weiterhin sind an den Stirnflächen des Gehäuses 40 nach außen weisende Vorsprünge 45, 46 angeformt, die als Positionier- oder Justierhilfe in die Nut 12 des Profilstabs 10 bzw. in die Hohlkammern 21 des rohrförmigen Elements 20 eingreifen.

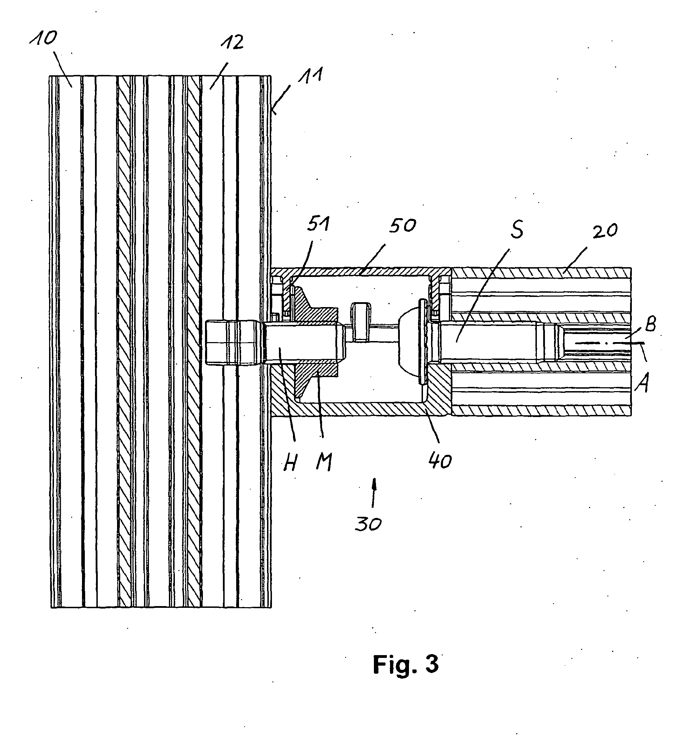

Der vorzugsweise aus Kunststoff-Spritzguss hergestellte Deckel 50 ergänzt die durch den Durchbruch 47 fehlende Mantelteilfläche des Gehäuses 40, wenn er mit seinen Rastmitteln 51 (siehe Fig. 3) in komplementär ausgebildete Gegenrastmittel 48 des Gehäuses 40 verankert ist.

Die Schnittdarstellung in Fig. 3 zeigt das Verbindungselement 30 in eingebautem Zustand.

Das Gehäuse 40 ist über die in die Bohrung B eingedrehte Schraube S mit dem rohrförmigen Element 20 fest verbunden. Die Befestigung des Gehäuses 40 mit dem Profilstab 10 erfolgt über eine Hammerschraube-Mutter-Verbindung. Dabei hintergreift der Kopf der Hammerschraube H die Nut 12, während sich die auf ihrem Schaft angeordnete Mutter M an der Innenseite der Zylinderfläche 42 abstützt.

Vorzugsweise erfolgt zuerst die Befestigung des Gehäuses 40 an dem rohrförmigen Element 20 mittels der Schraube S. Nach Einsetzen der vormontierten Baugruppe aus Hammerschraube H und Mutter M in die Nut 12 des Profilstabs 10 wird das Gehäuse 40 mit dem daran befestigten rohrförmigen Element 20 am Profilstab 10 verschraubt. Hierbei erweist sich die zum Durchbruch 47 hin als offene Bohrung 44 ausgestaltete Ausnehmung von Vorteil, indem der Schaft der Hammerschraube H mit der darauf befindlichen Mutter M orthogonal zur Längsachse A in das Gehäuse eingeführt werden kann. Als letzter Montageschritt wird der Deckel 50 auf das Gehäuse 40 aufgesteckt.

Bei Profilstäben 10, die mehrere Längsnuten 12 an einer Seitenfläche 11 aufweisen, ist die Lage und Anzahl der stirnseitigen Bohrungen 44 entsprechend angepasst. Dasselbe trifft auf ein rohrförmiges Element 20 zu, bei dem die Mittelbohrung B fehlt und stattdessen mehrere, um die Längsachse A angeordnete Längsbohrungen vorhanden sind.

Für den Fall, dass das rohrförmige Element 20 in einem von 90° verschiedenen Winkel auf den Profilstab 10 stößt, weist die betreffende Zylinderfläche 41, 42 des Gehäuses 40 eine, diesem Winkel entsprechende Gehrung auf.

## Patentansprüche

1. Lösbare Verbindung, umfassend einen Profilstab (10) mit mindestens einer ebenen Längsseite (11), die mindestens eine hinterschnittene Nut (12) aufweist,
ein rohrförmiges Element (20) mit einer Längsachse (A) und mindestens einer dazu parallel verlaufenden Bohrung (B), und
ein Verbindungselement (30), das zwischen dem Profilstab (10) und dem rohrförmigen Element (20) angeordnet ist und dessen Außenkontur im Wesentlichen der des rohrförmigen Elements (20) entspricht,
**dadurch gekennzeichnet, dass** das Verbindungselement (30) aus einem Gehäuse (40) und einem Deckel (50) besteht, wobei das Gehäuse (40) einen innenraum zur Aufnahme von Befestigungsmitteln (S, M) bildet und die Mantelfläche des Gehäuses (40) einen Durchbruch (47) aufweist, der mit dem Deckel (50) verschließbar ist.

2. Lösbare Verbindung nach Anspruch 1, **dadurch gekennzeichnet, dass** das Gehäuse (40) zwei, stirnseitig die Mantelfläche begrenzende Zylinderflächen (41, 42) aufweist, in denen mindestens je eine Bohrung (43, 44) angeordnet ist.

3. Lösbare Verbindung nach Anspruch 2, **dadurch gekennzeichnet, dass** die Zylinderflächen (41, 42) nach außen gerichtete Vorsprünge (45, 46) aufweisen.

4. Lösbare Verbindung nach Anspruch 2, **dadurch gekennzeichnet, dass** die mindestens eine Bohrung (43, 44) als eine, zum Durchbruch (47) hin offene Ausnehmung ausgebildet ist.

5. Lösbare Verbindung nach Anspruch 1, **dadurch gekennzeichnet, dass** das Gehäuse (40) aus Aluminium-Druckguss hergestellt ist.

## Claims

1. Releasable connection, comprising a profiled bar (10) with at least one flat longitudinal side (11) which has at least one undercut groove (12), a tubular element (20) with a longitudinal axis (A) and at least one hole (B) running parallel thereto, and
a connecting element (30) which is arranged between the profiled bar (10) and the tubular element (20) and the outer contour of which essentially corresponds to that of the tubular element (20), **characterized in that** the connecting element (30) comprises a housing (40) and a cover (50), the housing (40) forming an interior space for receiving fastening means (S, M) and the casing surface of the housing (40) having an opening (47) which can be closed with the cover (50).

2. Releasable connection according to Claim 1, **characterized in that** the housing (40) has two cylindrical surfaces (41, 42) which, on the end side, bound the casing surface and in which at least one hole (43, 44) is arranged in each case.

3. Releasable connection according to Claim 2, **characterized in that** the cylindrical surfaces (41, 42) have outwardly directed projections (45, 46).

4. Releasable connection according to Claim 2, **characterized in that** the at least one hole (43, 44) is designed as a recess which is open towards the opening (47).

5. Releasable connection according to Claim 1, **characterized in that** the housing (40) is produced from diecast aluminium.

## Revendications

1. Liaison détachable, comprenant une tige profilée (10) avec au moins une face longitudinale plane (11) qui présente au moins une rainure contre-dépouillée (12),
un élément tubulaire (20) avec un axe longitudinal (A) et au moins un perçage (B) étendu parallèlement à celui-ci, et
un élément de liaison (30) qui est disposé entre la tige profilée (10) et l'élément tubulaire (20) et dont le contour extérieur correspond sensiblement à celui de l'élément tubulaire (20),
**caractérisé en ce que**
l'élément de liaison (30) est constitué d'un boîtier (40) et d'un couvercle (50), le boîtier (40) formant un espace intérieur pour recevoir des éléments de fixation (S, M) et la surface d'enveloppe du boîtier (40) présentant un passage (47) qui se ferme avec le couvercle (50).

2. Liaison détachable selon la revendication 1,
**caractérisé en ce que**
le boîtier (40) présente deux surfaces cylindriques (41, 42) délimitant côté frontal la surface d'enveloppe, logeant au moins un perçage (43, 44).

3. Liaison détachable selon la revendication 2,
**caractérisé en ce que**
les surfaces cylindriques (41, 42) comportent des parties saillantes (45, 46) vers l'extérieur.

4. Liaison détachable selon la revendication 2,
**caractérisé en ce qu'**
au moins un perçage (43, 44) est conçu en tant qu'évidement ouvert vers le passage (47).

5. Liaison détachable selon la revendication 1,
**caractérisé en ce que**
le boîtier (40) est en aluminium moulé sous pression.
